(19) Europäisches Patentamt
European Patent Office
Office européen des brevets

(11) EP 0 656 131 B1

(12) # EUROPÄISCHE PATENTSCHRIFT

(45) Veröffentlichungstag und Bekanntmachung des Hinweises auf die Patenterteilung:
**29.10.1997 Patentblatt 1997/44**

(21) Anmeldenummer: **94908160.8**

(22) Anmeldetag: **12.08.1993**

(51) Int Cl.$^6$: **G03G 9/09**, G03G 9/097

(86) Internationale Anmeldenummer:
**PCT/EP93/02130**

(87) Internationale Veröffentlichungsnummer:
**WO 94/04962 (03.03.1994 Gazette 1994/06)**

(54) **ELEKTROSTATISCHE TONER, ENTHALTEND EINEN METALLKOMPLEXFARBSTOFF ALS LADUNGSSTABILISATOR**

ELECTROSTATIC TONER CONTAINING A METAL COMPLEX COLORANT AS CHARGE STABILISER

TONER ELECTROSTATIQUE CONTENANT UN COLORANT A COMPLEXES METALLIFERES SERVANT DE STABILISATEUR DE CHARGE

(84) Benannte Vertragsstaaten:
**BE CH DE ES FR GB IE IT LI NL**

(30) Priorität: **21.08.1992 DE 4227743**

(43) Veröffentlichungstag der Anmeldung:
**07.06.1995 Patentblatt 1995/23**

(73) Patentinhaber: **BASF Aktiengesellschaft
67063 Ludwigshafen (DE)**

(72) Erfinder:
- **GRYCHTOL, Klaus
D-6702 Bad Duerkheim (DE)**
- **BECK, Karin Heidrun
D-6700 Ludwigshafen (DE)**
- **DYLLICK-BRENZINGER, Rainer
D-6940 Weinheim (DE)**

(56) Entgegenhaltungen:
**EP-A- 0 251 326**
**EP-A- 0 255 925**
**EP-A- 0 503 861**
**DE-A- 2 317 469**

- **PATENT ABSTRACTS OF JAPAN vol. 11, no. 357 (C-458)(2804) 20. November 1987 & JP,A,62 129 358 (HODOGAYA) 11 June 1987**
- **PATENT ABSTRACTS OF JAPAN vol. 12, no. 441 (P-789)(3288) 21. November 1988 & JP,A,63 170 657 (CANON) 14 July 1988**
- **PATENT ABSTRACTS OF JAPAN vol. 14, no. 301 (P-1069)(4244) 28. Juni 1990 & JP,A,2 096 180 (MITA) 6 April 1990**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft neue elektrostatische Toner, enthaltend ein polymeres Bindemittel und als Ladungsstabilisator einen 1:2-Zirkoniumkomplex von Azofarbstoffen der Formel D-N=N-K, wobei D sich von einer Diazokomponente $D\text{-}NH_2$ ableitet, die aus der Gruppe, bestehend aus 2-Amino-4-nitrophenol, 2-Amino-5-nitrophenol, 2-Aminophenol-4-sulfonsäureamid, Anthranilsäure und Pikraminsäure, stammt, und K sich von Kupplungskomponente K-H ableitet, die aus der Gruppe, bestehend aus β-Naphthol, Acetessigsäureanilid und 1-Phenyl-3-methylpyrazol-5-on, stammt, sowie die Verwendung der obengenannten Metallkomplexe als Ladungsstabilisatoren in elektrostatischen Tonern.

Latente elektrostatische Bildaufzeichnungen werden dadurch entwickelt, daß der Toner auf dem elektrostatischen Bild induktiv abgeschieden wird. Die Ladungsstabilisatoren stabilisieren die elektrostatische Ladung des Toners. Dadurch wird das Bild kräftiger und konturenschärfer.

Die verwendeten Ladungsstabilisatoren müssen dabei vielseitige Anforderungen erfüllen:

- Fähigkeit zur Entwicklung des latenten elektrostatischen Bildes zu einem farbstarken sichtbaren Bild.
- Leichte Verteilbarkeit in der Tonerzubereitung, um ein störungsfreies, konturenscharfes, gleichförmiges Bild zu erzeugen.
- Unempfindlichkeit gegen Feuchtigkeit.
- Hohe Thermostabilität.

Aus der US-A-4 623 606, EP-A-144 377, EP-A-180 655, EP-A-393 479, JP-A-129 358/1987 oder JP-A-236 567/1990 sind elektrostatische Toner bekannt, die als Ladungsstabilisatoren Metallkomplexe von Azofarbstoffen aufweisen.

Es hat sich jedoch gezeigt, daß die Ladungsstabilisatoren des Standes der Technik häufig Mängel in ihrem Anforderungsprofil aufweisen.

Auch die DE-A- 2 317 469, EP-A- 251 326, EP-A- 255 925, JP-A- 170 657/1988 und EP-A- 503 861 beschreiben elektrostatische Toner, die 1:2-Metallkomplexe von Azofarbstoffen als Ladungsstabilisatoren enthalten, wobei sich die Komplexe von den Metallen Chrom, Mangan, Eisen oder Kobalt ableiten.

Aufgabe der vorliegenden Erfindung war es daher, einen neuen elektrostatischen Toner bereitzustellen, der über Ladungsstabilisatoren verfügt, die vorteilhafte anwendungstechnische Eigenschaften aufweisen.

Demgemäß wurden die eingangs näher bezeichneten elektrostatischen Toner gefunden.

Bei den 1:2-Zirkoniumkomplexen von Azofarbstoffen handelt es sich vorzugsweise um die symmetrischen 1:2-Komplexe.

Der Anteil des l:2-Metallkomplexfarbstoffes im elektrostatischen Toner beträgt in der Regel 0,01 bis 10 Gew.-%, bezogen auf das Gewicht des Toners.

Die in den neuen elektrostatischen Tonern enthaltenen polymeren Bindemittel sind an sich bekannt. Sie sind in der Regel thermoplastisch und haben einen Erweichungspunkt von 40 bis 200°C, vorzugsweise 50 bis 130°C und insbesondere 65 bis 115°C. Beispiele für polymere Bindemittel sind Polystyrol, Copolymere von Styrol mit einem Acrylat oder Methacrylat, Copolymere von Styrol mit Butadien und/oder Acrylnitril, Polyacrylate, Polymethacrylate, Copolymere eines Acrylates oder Methacrylates mit Vinylchlorid oder Vinylacetat, Polyvinylchlorid, Copolymere von Vinylchlorid mit Vinylidenchlorid, Copolymere von Vinylchlorid mit Vinylacetat, Polyesterharze, Epoxyharze, Polyamide oder Polyurethane.

Zusätzlich zu den obengenannten 1:2-Metallkomplexfarbstoffen und den polymeren Bindemitteln können die erfindungsgemäßen Toner in bekannten Mengen Farbmittel, magnetisch anziehbares Material, Wachse und Fließmittel enthalten.

Die Farbmittel können organische Farbstoffe oder Pigmente, wie Nigrosin, Anilinblau, 2,9-Dimethylchinacridon, C.I. Disperse Red 15 (C.I. 6010), C.I. Solvent Red 19 (C.I. 26 050), C.I. Pigment Blue 15 (C.I. 74 160), C.I. Pigment Blue 22 (C.I. 69 810) oder C.I. Solvent Yellow 16 (C.I. 12 700), oder anorganische Pigmente, wie Ruß, Rotblei, gelbes Bleioxid oder Chromgelb, sein. Allgemein überschreitet die Menge des im Toner vorhandenen Farbmittels nicht 15 Gew.-%, bezogen auf das Gewicht des Toners.

Das magnetisch anziehbare Material kann beispielsweise Eisen, Nickel, Chromoxid, Eisenoxid oder ein Ferrit der Formel $MeFe_2O_4$, worin Me ein zweiwertiges Metall, z.B. Eisen, Kobalt, Zink, Nickel oder Mangan, darstellt, sein.

Die 1:2-Metallkomplexfarbstoffe können nach an sich bekannten Methoden erhalten werden. Beispielsweise kann man zunächst aus einem Azofarbstoff der Formel

D-N=N-K,

in der D und K jeweils die obengenannte Bedeutung besitzen, und einem Zirkoniumsalz (z.B. die jeweiligen Chloride oder Sulfate oder auch die entsprechenden Zirkonylverbindungen) den 1:1-Metallkomplex herstellen und diesen anschließend mit einem Azofarbstoff der Formel

$D^1$-N=N-$K^1$,

in der $D^1$ und $K^1$ jeweils die Bedeutung von D und K besitzen, zum 1:2-Komplex umsetzen.

Wie oben bereits ausgeführt, ist es aber auch möglich, den 1:2-Metallkomplex durch einstufige Umsetzung der Farbstoffe D-N=N-K und $D^1$-N=N-$K^1$ mit einem Zirkoniumsalz herzustellen.

Die Herstellung der erfindungsgemäßen Toner erfolgt nach üblichen Verfahren, z.B. durch Vermischen der Bestandteile in einem Kneter und anschließendes Pulverisieren oder durch Schmelzen des polymeren Bindemittels oder eines Gemisches der polymeren Bindemittel, anschließende feine Zerteilung einer oder mehrerer l:2-Metallkomplexfarbstoffe, sowie der anderen Zusätze, falls verwendet, in dem geschmolzenen Harz unter Anwendung der für diesen Zweck bekannten Misch- und Knetmaschinen, anschließende Abkühlung der Schmelze zu einer festen Masse und schließlich Vermahlen der festen Masse zu Teilchen der gewünschten Teilchengröße (in der Regel 0,1 bis 50 µm). Es ist auch möglich, das polymere Bindemittel und den Ladungsstabilisator in einem gemeinsamen Lösungsmittel zu lösen und die anderen Zusätze in die Lösung zu geben. Die Lösung kann so als Flüssigtoner verwendet werden.

Man kann die Flüssigkeit aber auch in an sich bekannter Weise sprühtrocknen oder die Lösungsmittel abdampfen und den festen Rückstand zu Teilchen der gewünschten Teilchengröße vermahlen.

Es ist weiterhin möglich, die als Ladungsstabilisatoren verwendeten 1:2-Zirkoniumkomplexe nicht zu lösen, sondern fein in der Lösung des polymeren Bindemittels zu dispergieren. Die so erhaltene Tonerzubereitung kann dann, beispielsweise gemäß der US-A-4 265 990, in einem xerographischen Bildaufzeichnungssystem verwendet werden.

Die obengenannten 1:2-Zirkoniumkomplexe sind vorteilhafte Ladungsstabilisatoren. Sie genügen in der Regel dem eingangs geforderten Anwendungsprofil und zeichnen sich besonders dadurch aus, daß sie bei Zusatz zu einer Tonerpräparation dieser ein günstiges elektrostatisches Aufladungsprofil verleihen, d.h. die Toner lassen sich schnell und hoch aufladen. Die erfindungsgemäßen Ladungsstabilisatoren bewirken weiterhin, daß die Ladung auf einem hohen Niveau konstant gehalten wird.

Die folgenden Beispiele sollen die Erfindung näher erläutern.

A) Herstellung der Komplexfarbstoffe

Beispiel H1

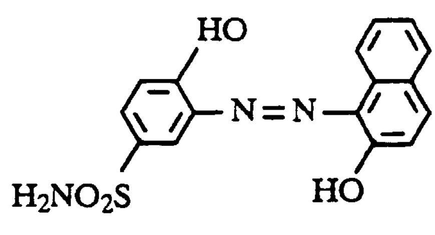

(1:2 Zirkonium-Komplex)

In 600 ml Ethylenglykol wurden 33 g des Azofarbstoffs aus 1-Hydroxy-2-aminobenzol-4-sulfonsäureamid und β-Naphthol und 40 g Zirkonylchlorid eingetragen. Danach wurde auf 135°C erhitzt und 4 Stunden bei dieser Temperatur nachgerührt, wobei sich dünnschichtchromatographisch kein Ausgangsmaterial mehr nachweisen ließ. Nach dem Abkühlen ließ man in 3000 ml Wasser und 30 ml konz. Salzsäure einlaufen. Man rührte 10 Minuten nach und stellte mit Natriumacetat (wasserfrei) einen pH-Wert von 4,3 ein. Anschließend wurde abgesaugt und getrocknet.

Man erhielt 44 g eines roten Pulvers.

Beispiel H2

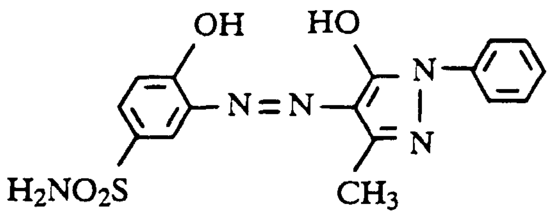

(1:2 Zirkonium-Komplex)

In 750 ml Ethylenglykol wurden 45 g des Azofarbstoffs aus 1-Hydroxy-2-aminobenzol-4-sulfonsäureamid und 1-Phenyl-3-methylpyrazol-5-on und 40 g Zirkonylchlorid eingetragen. Man erhitzte auf 150°C, wobei eine klare Lösung entstand. Die Temperatur wurde 5 Stunden gehalten und anschließend über Nacht bei Raumtemperatur nachgerührt. Der Farbstoff fiel teilweise aus. Durch Verdünnen mit wäßriger Natriumacetatlösung wurde der Farbstoff bei einem pH-Wert von 6,3 vollkommen ausgefällt. Nach dem Absaugen wurde mit Wasser gewaschen und getrocknet. Man erhielt 75 g eines roten Pulvers.

In analoger Weise können die Zirkoniumkomplexe der folgenden Azofarbstoffe erhalten werden.

Beispiel Nr.

Beispiel Nr.

H3

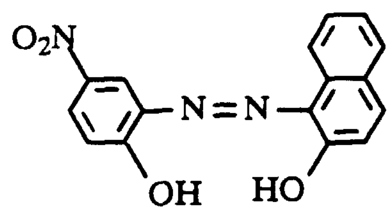

H4

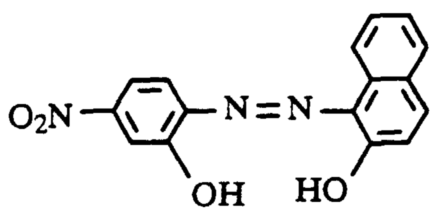

H5

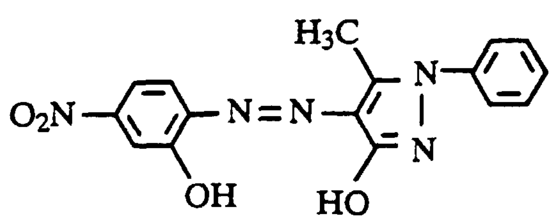

B) Anwendung

Die Anwendungsbeispiele wurden mit farbmittelfreien Tonermodellen, bestehend aus Harz und den erfindungsgemäßen Ladungsstabilisatoren, durchgeführt.

I. Herstellung der Toner

Beispiel A1

In eine Lösung von 10 g eines nicht vernetzten Styrol/Butylacrylatharzes in 100 ml Xylol wurden bei Raumtemperatur 0,2 g des Farbstoffs aus Beispiel H 1 eingetragen und anschließend gefriergetrocknet. Anschließend wurde gemahlen und durch Sichtung wurden Tonerteilchen mit einer mittleren Partikelgröße von 50 µm erzeugt.

Beispiel A2

In einem Mixer wurden 10 g eines nicht vernetzten Styrol/Butylacrylatharzes und 0,2 g des Farbstoffs aus Beispiel H 1 intensiv gemischt, bei 120°C geknetet, extrudiert und gemahlen. Es wurden durch Sichtung Tonerteilchen einer mittleren Partikelgröße von 50 µm erzeugt.

II. Herstellung der Developer und Prüfung

Zur Herstellung eines Developers wurden 99 Gew.-% eines Stahlcarriers, der eine mittlere Teilchengröße von 100 µm aufwies, mit 1 Gew.-% des Toners genau eingewogen und für einen unten näher bestimmten Zeitraum auf einem Rollenbock aktiviert. Danach wurde die elektrostatische Aufladung des Developers bestimmt. Etwa 5 g des aktivierten Developers wurden in einem handelsüblichen q/m-Meter (Firma Epping GmbH, Neufahrn) in eine hard-blow-off-Zelle, die mit einem Elektrometer elektrisch verbunden war, eingefüllt. Die Maschenweiten der in der Meßzelle eingesetzten Siebe betrug für die Beispiele 63 µm.

Damit war gewährleistet, daß der Toner möglichst vollständig ausgeblasen wurde, der Carrier aber in der Meßzelle verblieb. Durch einen kräftigen Luftstrom (ca. 4 000 $cm^3$/min) und gleichzeitigem Absaugen wurde der Toner nahezu vollständig von den Carrierteilchen entfernt, wobei letztere in der Meßzelle verblieben. Die Aufladung des Carriers wurde am Elektrometer registriert. Diese entsprach dem Betrag der Aufladung der Tonerteilchen, nur mit umgekehrten Vorzeichen. Zur Berechnung des q/m-Wertes wurde deshalb der Betrag von q mit den umgekehrten Vorzeichen verwendet. Durch Zurückwiegen der Meßzelle wurde die Masse an ausgeblasenem Toner bestimmt und daraus die elektrostatische Aufladung q/m berechnet.

Die an den Tonern bestimmte Aufladung ist in der folgenden Tabelle zusammengefaßt.

Tabelle

| Beispiel Nr. | Verbindung aus Beispiel | Zubereitung des Toners* | Aufladung nach einer Aktivierung von | | | |
|---|---|---|---|---|---|---|
| | | | 10 min | 30 min | 60 min | 120 min |
| | | | [µC/g] | | | |
| A1 | H1 | G | - 11,8 | - 11,6 | - 13,3 | - 13,7 |
| A2 | H1 | K | - 10,4 | - 10,0 | - 9,8 | - 10,0 |
| A3 | H2 | G | - 10,7 | - 10,9 | - 11,7 | - 13,0 |
| A4 | H3 | G | - 12,4 | - 11,2 | - 11,1 | - 11,4 |

* Die Zubereitung des Toners in den Beispielen A3 und A4 erfolgte durch Gefriertrocknung gemäß Beispiel A1 (in der Tabelle mit "G" gekennzeichnet). Das Kneten bei einer Temperatur oberhalb des Erweichungspunktes des Harzes gemäß Beispiel A2 ist in der Tabelle mit "K" gekennzeichnet.

**Patentansprüche**

1. Elektrostatische Toner, enthaltend ein polymeres Bindemittel und als Ladungsstabilisator einen 1:2-Zirkoniumkomplex von Azofarbstoffen der Formel D-N=N-K, wobei D sich von einer Diazokomponente D-$NH_2$ ableitet, die aus der Gruppe, bestehend aus 2-Amino-4-nitrophenol, 2-Amino-5-nitrophenol, 2-Aminophenol-4-sulfonsäureamid, Anthranilsäure und Pikraminsäure, stammt, und K sich von Kupplungskomponente K-H ableitet, die aus der Gruppe, bestehend aus β-Naphthol, Acetessigsäureanilid und l-Phenyl-3-methylpyrazol-5-on, stammt.

2. Elektrostatische Toner nach Anspruch 1, enthaltend einen symmetrischen 1:2-Zirkoniumkomplexes von Azofarbstoffen als Ladungsstabilisator.

3. Elektrostatische Toner nach Anspruch 1, enthaltend 0,01 bis 10 Gew.-%, bezogen auf das Gewicht des Toners, eines 1:2-Zirkoniumkomplexes von Azofarbstoffen.

4. Elektrostatische Toner nach Anspruch 1, enthaltend zusätzlich ein Farbmittel.

5. Verwendung der 1:2-Zirkoniumkomplexe von Azofarbstoffen gemäß Anspruch 1 als Ladungsstabilisatoren in elektrostatischen Tonern.

## Claims

1. An electrostatic toner containing a polymeric binder and as charge stabilizer a 1:2 zirconium complex of azo dyes of the formula D-N=N-K, where D is derived from a diazo component $D\text{-}NH_2$ selected from the group consisting of 2-amino-4-nitrophenol, 2-amino-5-nitrophenol, 2-aminophenol-4-sulfonamide, anthranilic acid and picramic acid and K is derived from a coupling component K-H selected from the group consisting of β-naphthol, acetoacetanilide and l-phenyl-3-methylpyrazol-5-one.

2. An electrostatic toner as claimed in claim 1, containing a symmetrical 1:2 zirconium complex of azo dyes as charge stabilizer.

3. An electrostatic toner as claimed in claim 1, containing from 0.01 to 10% by weight, based on the weight of the toner, of a 1:2 zirconium complex of azo dyes.

4. An electrostatic toner as claimed in claim 1, additionally containing a colorant.

5. The use of the 1:2 zirconium complexes of azo dyes as set forth in claim 1 as charge stabilizers in electrostatic toners.

## Revendications

1. Toner électrostatique contenant un liant polymère et, en tant que stabilisateur de charge, un complexe 1:2 du zirconium et de colorants azoïques de formule D-N=N-K, où D dérive d'un composant diazoïque $D\text{-}NH_2$, choisi dans le groupe formé du 2-amino-4-nitrophénol, du 2-amino-5-nitrophénol, du 2-aminophénol-4-sulfonamide, de l'acide anthranilique et de l'acide picramique, et K dérive du composant de copulation K-H, choisi dans le groupe formé par le β-naphtol, l'anilide d'acide acétoacétique et la 1-phényl-3-méthylpyrazol-5-one.

2. Toner électrostatique selon la revendication 1, contenant un complexe 1:2 symétrique du zirconium et de colorants azoïques en tant que stabilisateur de charges.

3. Toner électrostatique selon la revendication 1, contenant 0,01-10 % en poids par rapport au poids du toner, d'un complexe 1:2 du zirconium et de colorants azoïques.

4. Toner électrostatique selon la revendication 1, contenant en outre un colorant.

5. Utilisation de complexes 1:2 du zirconium et de colorants azoïques selon la revendication 1 en tant que stabilisateurs de charges dans des toners électrostatiques.